# EUROPÄISCHE PATENTSCHRIFT

(11) **EP 2 616 505 B1**
(45) Veröffentlichungstag und Bekanntmachung des Hinweises auf die Patenterteilung: **02.03.2016**
(21) Anmeldenummer: 11824666.9
(22) Anmeldetag: 31.08.2011
(51) Int. Cl.: C08J 9/00, C08L 61/28, C08J 3/24, C08J 3/28, C08J 9/36, C08J 9/30, C08G 12/32

(54) **VERFAHREN ZUR HERSTELLUNG VON MELAMIN/FORMALDEHYD-SCHAUMSTOFFEN**
PROCESS FOR PRODUCING MELAMINE-FORMALDEHYDE FOAMS
PROCÉDÉ DE PRODUCTION DE MOUSSES DE MÉLAMINE/FORMALDÉHYDE

(30) Priorität: 16.09.2010 EP 10176979
(43) Veröffentlichungstag der Anmeldung: 24.07.2013
(73) Patentinhaber: BASF SE, 67056 Ludwigshafen (DE)
(72) Erfinder: BAUMGARTL, Horst, 55122 Mainz (DE); WESTER, Bettina, 67133 Maxdorf (DE); SCHIERHOLZ, Jens-Uwe, 64625 Bensheim (DE)
(86) Internationale Anmeldenummer: PCT/IB2011/053803
(87) Internationale Veröffentlichungsnummer: WO 2012/035457

(56) Entgegenhaltungen:
- EP-A1- 1 505 105
- EP-A1- 1 505 105
- WO-A1-2007/110361
- WO-A1-2009/021963
- CN-A- 101 198 646
- US-A- 4 334 971

## Beschreibung

Die Erfindung betrifft Verfahren zur Herstellung von Melamin/Formaldehyd-Schaumstoffen, umfassend die aufeinanderfolgenden Verfahrensschritte a) und b):
a) Erwärmen unter Aufschäumen und Vernetzen einer Mischung, enthaltend ein Melamin/Formaldehyd-Vorkondensat, einen Härter und ein Treibmittel, und
b) Tempern des in Verfahrensschritt a) erhaltenen Schaumstoffs.

Weiterhin betrifft die Erfindung Melamin/Formaldehyd-Schaumstoffe sowie deren Verwendung.

Offenzellige elastische Schaumstoffe auf Basis von Melamin/Formaldehyd-Harzen sowie Verfahren zu ihrer Herstellung durch Erwärmen mit Heißluft, Wasserdampf oder Mikrowellenbestrahlung unter Aufschäumen und Vernetzen einer treibmittelhaltigen Lösung oder Dispersion eines Melamin/Formaldehyd-Vorkondensates, gefolgt von einem Temperschritt, sind bekannt und beispielsweise in EP-A 74 593, EP-A 17 671, EP-A 17 672 und EP-A 37 470 beschrieben.

Schaumstoffe auf Basis von Formaldehydharzen emittieren unerwünschterweise geringe Mengen Formaldehyd. Die Formaldehyd-Emission steigt mit zunehmender Temperatur und Feuchtigkeit an.

Die Formaldehydemissionen von Melamin/Formaldehyd-Schaumstoffen können beispielsweise gemäß WO 06/134083 verringert werden, indem bei der Herstellung der Schaumstoffe bereits während des Schäum- und Vernetzungsschritts spezielle Formaldehydfänger, beispielsweise Harnstoff, zugesetzt werden. Bei hohen Temperaturen verlieren diese Fänger aber ihre Wirksamkeit und sie beeinflussen andere Schaumstoffeigenschaften in negativer Weise. Grundsätzlich wird daher angestrebt, den Einsatz zusätzlicher Stoffe bei der Herstellung von Melamin/Formaldehyd-Schaumstoffen zu vermeiden, um unerwünschte Einflüsse auf den Schäumvorgang bzw. die Schaumstoffeigenschaften auszuschliessen.

Die WO 01/94436 beschreibt daher Verfahren zur Herstellung von Melamin/Formaldehyd-Schaumstoffen mit geringer Formaldeyhd-Emission, bei denen ein Melamin/Formaldehyd-Vorkondensat mit einem Molverhältnis Melamin zu Formaldehyd von größer als 1:2, insbesondere von 1:1 bis 1:1,9, eingesetzt wird, welches bevorzugt frei von Sulfitgruppen ist. Diese Melamin/Formaldehyd-Schaumstoffe mit derart niedrigen Formaldehydgehalten weisen zwar nach in der Regel 30-minütiger Temperung bei 220 °C sehr niedrige Formaldehyd-Emissionen auf, ihre mechanischen Eigenschaften (Zugfestigkeit, Reissfestigkeit) sind aber verbesserungswürdig.

Melamin/Formaldehyd-Schaumstoffe mit höheren Formaldehydgehalten als 1:2 (Molverhältnis Melamin:Formaldehyd des eingesetzten Vorkondensats) weisen deutlich bessere mechanische Eigenschaften auf, die Formaldehydemissionen steigen aber mit zunehmendem Formaldehydgehalt des Vorkondensats erheblich an, insbesondere sulfitmodifzierte Harze lassen die gewünschte Hydrolysestabilität in feuchtwarmer Umgebung vermissen. Diese mangelhafte Stabilität führt zu einem unerwünschten, erheblichen Anstieg der Formaldehydfreisetzung bei erhöhten Temperaturen und Luftfeuchten. Ein weiterer Nachteil dieser Schaumstoffe ist ihre Vergilbung bei erhöhten Tempertemperaturen.

Aufgabe der vorliegenden Erfindung war es daher, Verfahren zu finden, nach denen sich Melamin/Formaldehyd-Schaumstoffe herstellen lassen, die auch unter warm/feucht Bedingungen möglichst geringe Formaldehydemissionen aufweisen, gleichzeitig aber gute mechanische Eigenschaften haben und möglichst keine Vergilbungseffekte zeigen.

Demgemäß wurden die eingangs genannten Verfahren zur Herstellung von Melamin/Formaldehyd-Schaumstoffen gefunden, wobei erfindungswesentlich ist,
- dass im Verfahrensschritt a) ein Vorkondensat eingesetzt wird, welches ein Molverhältnis von Melamin:Formaldehyd im Bereich von 1:2,5 bis 1:3,5 aufweist, und
- welches einen Sulfitgruppengehalt, bezogen auf das Gesamtgewicht des Melamin/Formaldehyd-Vorkondensats, im Bereich von 0 Gew.-% aufweist und
- dass im Verfahrensschritt b) bei einer Temperatur im Bereich von 250 bis 270° getempert wird.

Weiterhin wurden nach den erfindungsgemäßen Verfahren herstellbare Melamin/Formaldehyd-Schaumstoffe sowie deren Verwendungen gefunden.

Die nach den erfindungsgemäßen Verfahren herstellbaren Melamin/Formaldehyd-Schaumstoffe weisen auch unter warm/feucht Bedingungen nur geringe Formaldehydemissionen auf, haben gute mechanische Eigenschaften und zeigen keine Vergilbungseffekte.

Die erfindungsgemäßen Verfahren, Gegenstände und Verwendungen werden im folgenden beschrieben.

Die erfindungsgemäßen Verfahren zur Herstellung von Melamin/Formaldehyd-Schaumstoffen umfassen die aufeinanderfolgenden Verfahrensschritte a) und b):
a) Erwärmen unter Aufschäumen und Vernetzen einer Mischung, enthaltend ein Melamin/Formaldehyd-Vorkondensat, einen Härter und ein Treibmittel, und
b) Tempern des in Verfahrensschritt a) erhaltenen Schaumstoffs,
wobei diese Verfahrensschritte sowie die in Verfahrensschritt a) einsetzbaren Melamin/Formaldehyd-Vorkondensate, Härter und Treibmittel dem Fachmann grundsätzlich bekannt und in der Literatur beschrieben sind (siehe beispielsweise die eingangs zitierten Schriften).

Erfindungswesentlich ist,
- dass im Verfahrensschritt a) ein Vorkondensat eingesetzt wird, welches ein Molverhältnis von Melamin:Formaldehyd im Bereich von 1:2,5 bis 1:3,5, aufweist, und
- welches einen Sulfitgruppengehalt, bezogen auf das Gesamtgewicht des Melamin/Formaldehyd-Vorkondensats, im Bereich von 0 Gew.-% aufweist.

Das Melamin/Formaldehyd-Vorkondensat kann neben Melamin und Formaldehyd bis zu 50 Gew.-%, vorzugsweise bis 20 Gew.-%, (jeweils bezogen auf das Gewicht einkondensierten Melamins) anderer Duroplastbildner und bis zu 50 Gew.-%, vorzugsweise bis zu 20 Gew.-%, (jeweils bezogen auf das Gewicht einkondensierten Formaldehyds) anderer Aldehyde einkondensiert enthalten. Als Duroplastbildner kommen beispielsweise in Frage: alkyl- und arylalkylsubstituiertes Melamin, Harnstoff, Urethane, Carbonsäureamide, Dicyandiamid, Guanidin, Sulfurylamid, Sulfonsäureamide, aliphatische Amine, Glykole, Phenol und dessen Derivate. Als andere Aldehyde können z.B. Acetaldehyd, Trimethylolacetaldehyd, Acrolein, Benzaldehyd, Furfurol, Glyoxal, Glutaraldehyd, Phthalaldehyd und Terephthalaldehyd eingesetzt werden. Besonders bevorzugt ist ein unmodifiziertes Melamin/Formaldehyd-Vorkondensat, d.h. eines, welches keine anderen Duroplastbildner oder andere Aldehyde enthält. Weitere Einzelheiten über Melamin/Formaldehyd-Kondensationsprodukte finden sich in Houben-Weyl, Methoden der organischen Chemie, Band 14/2, 1963, Seiten 319 bis 402.

Kommerziell verfügbare Melamin/Formaldehyd-Vorkondensate sind für eine Vielzahl von Anwendungsgebieten, beispielsweise für die Weiterverarbeitung zu Leimen, einsetzbar. Für einige dieser Anwendungsgebiete ist es vorteilhaft, sulfitgruppenhaltige Melamin/Formaldehyd-Vorkondensate einzusetzen. Solche sulfitgruppenhaltige Melamin/Formaldehyd-Vorkondensate sind beispielsweise nach EP-B 37470 erhältlich, nach der durch Zusatz von 1 bis 20 Gew.-% Natriumdisulfits bei der Kondensation von Melamin und Formaldehyd einkondensierte Sulfitgruppen erhalten werden.

Für die erfindungsgemäßen Verfahren ist es aber wesentlich, daß im Verfahrensschritt a) ein Vorkondensat eingesetzt wird, welches neben dem obengenannten erfindungswesentlichen Molverhältnis Melamin: Formaldehyd auch keinen Sulfitgruppengehalt aufweist.

Zur Emulgierung des Treibmittels und zur Stabilisierung des Schaumes im Verfahrensschritt a) ist der Zusatz eines Emulgators oder eines Emulgatorgemisches erforderlich. Als Emulgatoren können anionische, kationische und nichtionische Tenside sowie deren Gemische verwendet werden.

Geeignete anionische Tenside sind Diphenylenoxidsulfonate, Alkan- und Alkylbenzolsulfonate, Alkylnaphthalinsulfonate, Olefinsulfonate, Alkylethersulfonate, Fettalkoholsulfate, Ethersulfate, alpha-Sulfofettsäureester, Acylaminoalkansulfonate, Acylisethionate, Alkylethercarboxylate, N-Acylsarcosinate, Alkyl- und Alkyletherphosphate. Als nichtionische Tenside können Alkylphenolpolyglykolether, Fettalkoholpolyglykolether, Fettsäurepolyglykolether, Fettsäurealkanolamide, EO/PO-Blockcopolymere, Aminoxide, Glycerinfettsäureester, Sorbitanester und Alkylpolyglucoside verwendet werden. Als kationische Emulgatoren kommen Alkyltriammoniumsalze, Alkylbenzyldimethyl-ammoniumsalze und Alkylpyridiniumsalze zum Einsatz. Die Emulgatoren werden vorzugsweise in Mengen von 0,2 bis 5 Gew.-%, bezogen auf das Melamin/Formaldehyd-Vorkondensat, zugesetzt.

Um aus dem Melamin/Formaldehyd-Vorkondensat, welches bevorzugt in Form einer wäßrigen Lösung oder Dispersion eingesetzt wird, im Verfahrensschritt a) einen Schaum zu erzeugen, muss dieses ein Treibmittel enthalten, wobei sich die Menge nach der erwünschten Dichte des Schaumstoffs richtet. Prinzipiell können bei dem erfindungsgemäßen Verfahren sowohl physikalische als auch chemische Treibmittel angewandt werden. Als physikalische Treibmittel bieten sich z.B. an: Kohlenwasserstoffe, halogenierte, insbesondere fluorierte Kohlenwasserstoffe, Alkohole, Äther, Ketone und Ester in flüssiger Form oder Luft und CO₂ als Gase. Als chemische Treibmittel kommen z.B. Isocyanate in Gemisch mit Wasser in Frage, wobei als wirksames Treibmittel CO₂ freigesetzt wird, ferner Carbonate und Bicarbonate im Gemisch mit Säuren, die ebenfalls CO₂ erzeugen, sowie Azoverbindungen, wie Azodicarbonamid. Bei einer bevorzugten Ausführungsform der Erfindung wird der wässrigen Lösung bzw. Dispersion des Melamin/Formaldehyd-Vorkondensats zwischen 1 und 40 Gew.-%, bezogen auf das Melamin/Formaldehyd-Vorkondensat, eines physikalischen Treibmittels mit einem Siedepunkt zwischen 0 und 80°C zugesetzt; bei Pentan sind es vorzugsweise 5 bis 15 Gew.-%.

Als Härter werden im Verfahrensschritt a) acide Verbindungen eingesetzt, die die Weiterkondensation des Melamin/Formaldehyd-Vorkondensat katalysieren. Die Mengen liegen zwischen 0,01 und 20 Gew.-%, vorzugsweise zwischen 0,05 und 5 Gew.-%, bezogen auf das Melamin/Formaldehyd-Vorkondensat. In Frage kommen anorganische und organische Säuren, z.B. Salzsäure, Schwefelsäure, Phosphorsäure, Salpetersäure, Ameisensäure, Essigsäure, Oxalsäure, Toluolsulfonsäuren, Amidosulfonsäuren sowie Säureanhydride.

Die wässrige Lösung bzw. Dispersion des in Verfahrensschritt a) eingesetzten Melamin/Formaldehyd-Vorkondensats ist vorzugsweise frei von weiteren Zusatzstoffen. Für manche Zwecke kann es jedoch günstig sein, bis zu 20 Gew.-%, vorzugsweise weniger als 10 Gew.-%, bezogen auf das Melamin/Formaldehyd-Vorkondensat, üblicher Zusatzstoffe, wie Farbstoffe, Flammschutzmittel, UV-Stabilisatoren, Mittel zur Herabsetzung der Brandgastoxizität oder zur Förderung der Verkohlung zuzusetzen. Da die Schaumstoffe im allgemeinen offenporig sind und Wasser aufnehmen können, kann es für manche Anwendungszwecke notwendig sein, Hydrophobierungsmittel in Mengen von 0,2 bis 5 Gew.-% zuzusetzen. In Frage kommen dabei z.B. Silikone, Paraffine, Silikon- und Fluortenside, hydrophobe Kohlenwasserstofftenside, Silikon- und Fluorcarbonemulsionen.

Die Konzentration des Melamin/Formaldehyd-Vorkondensates in der Mischung aus Vorkondensat und Lösungs- bzw. Dispergiermittel, insbesondere Wasser, kann in weiten Grenzen zwischen 55 und 85 Gew.-%, vorzugsweise zwischen 63 und 80 Gew.-%, jeweils bezogen auf das Gesamtgewicht aus Melamin/Formaldehyd-Vorkondensat und Lösungs- bzw. Dispergiermittel, schwanken. Die bevorzugte Viskosität der Mischung aus Vorkondensat und Lösungs- bzw. Dispergiermittel liegt zwischen 1 und 3000 dPa s, vorzugsweise zwischen 5 und 2000 dPa s.

Die Zusatzstoffe werden mit der wässrigen Lösung oder Dispersion des Melamin/Formaldehyd-Vorkondensat homogen vermischt, wobei das Treibmittel ggf. auch unter Druck eingepresst werden kann. Man kann jedoch auch von einem festen, z.B. sprühgetrockneten Melamin/Formaldehyd-Vorkondensat ausgehen und dieses dann mit einer wässrigen Lösung des Emulgators, dem Härter sowie dem Treibmittel vermischen. Nach dem Vermischen wird die erhitzte Harzlösung mit dem dispergierten Treibmittel durch eine Düse ausgetragen und schäumt anschließend auf.

Das Aufschäumen der treibmittelhaltigen Lösung oder Dispersion wird nach Austritt aus der Düse - wie in EP-B 17671 beschrieben - durch Heissluft oder Hochfrequenzbestrahlung unterstützt. Bevorzugt wird der Schäumprozess mit Ultrahochfrequenzbestrahlung nach EP-B 37470 durchgeführt. Bei dieser sogenannten dielektrischen Erwärmung kann grundsätzlich mit Mikrowellen im Frequenzbereich von 0,2 GHz bis 100 GHz gearbeitet werden. Für die industrielle Praxis stehen Frequenzen von 0,915, 2,45 und 5,8 GHz zur Verfügung, wobei 2,45 GHz besonders bevorzugt sind. Erzeugt werden Mikrowellen in einem Magnetron, wobei in der Regel mehreren Magnetronen gleichzeitig zum Einsatz kommen.

Zweckmäßigerweise wird die Bestrahlung so durchgeführt, dass die Leistungsaufnahme der Lösung oder Dispersion zwischen 5 und 200, vorzugsweise zwischen 9 und 120 KW, bezogen auf 1 kg Wasser in der Lösung bzw. Dispersion liegt.

Die Bestrahlung der zu verschäumenden Mischung erfolgt unmittelbar nachdem sie aus der Schäumdüse ausgetreten ist. Dabei verdampft das Treibmittel, die Harzmischung schäumt auf und härtet gleichzeitig aus.

Ein weiteres wesentliches Merkmal der erfindungsgemäßen Verfahren ist, daß der im Verfahrensschritt a) erhaltene Schaumstoff in einem nachfolgenden Verfahrensschritt b) bei einer Temperatur im Bereich von 250 bis 270°C getempert wird, wobei der Formaldehyd weitestgehend entfernt wird.

In einer bevorzugten Ausführungsform der erfindungsgemäßen Verfahren wird das Tempern gemäss Verfahrenschritt b) mit Heissluft ausgeführt, die Dauer des Temperns beträgt 10 bis 60 min, vorzugsweise 31 bis 50 min, besonders bevorzugt 35 bis 40 min.

In einer weiteren bevorzugten Ausführungsform der erfindungsgemäßen Verfahren erfolgt im Verfahrensschritt b) das Tempern durch Heißluft mit einem Mengenstrom im Bereich von 2000 bis 8000 Nm³/ m² durchströmter Schaumfläche / h (mit Normbedingungen gemäß DIN 1343).

In einer weiteren Ausführungsformen der erfindungsgemäßen Verfahren kann nach Verfahrensschritt b) ein Verfahrensschritt c) durchgeführt werden, in dem der getemperte Schaumstoff zur Elastifzierung verpreßt wird.

Der Verfahrensschritt c) ist dem Fachmann grundsätzlich bekannt und in der Literatur, beispielsweise in EP-A 1 505 105 und EP-B 37470, beschrieben.

Die nach den erfindungsgemäßen Verfahren herstellbaren Melamin/Formaldehyd-Schaumstoffe weisen eine sehr geringe Formaldehydemission auf, insbesondere unter warm/feucht Bedingungen. Die Formaldehydemissionen können in einer dynamischen Prüfkammer gemäss DIN EN 717-1 oder aber in Wasser gemäss DIN EN 14184-1 und JIS L 1041 oder aber in gesättigter Wasserdampfatmosphäre gemäss VDA 275 gemessen werden. Die Formaldehyemissionen der erfindungsgemässen Schaumstoffe betragen < 0,03 mg Formaldehyd / m³ Kammerluft (gemessen gemäss DIN EN 717-1), < 40 mg Formaldehyd / kg Schaumstoff (gemessen gemäss DIN EN 14184-1 und JIS L 1041) und < 150 mg Formaldehyd / kg Schaumstoff (gemessen gemäss VDA 275). Die erfindungsgemässen Schaumstoffe erfüllen alle Anforderungen des Ökotex Standard 100 in den Klassen I (Produkte in Kontakt mit der Haut von Babies und Kleinkindern) und II (Produkte mit direktem Hautkontakt). Sie besitzen darüberhinaus gute mechanische Eigenschaften und weisen keinerlei Vergilbung auf. Ihre Dichte kann zwischen 4 und 50 g/l, bevorzugt zwischen 4 und 20 g/l eingestellt werden und die Zugfestigkeitswerte für Dichten zwischen 8 und 11 g/l liegen oberhalb 100 kPa, gemessen gemäss DIN EN ISO 1798.

Die Schaumstoffe können als Platten oder Bahnen mit einer Höhe bis zu 1 m hergestellt werden oder als Schaumfolien mit einer Dicke von wenigen mm. Aus derartigen Schaumstoffbahnen können alle erwünschten Platten- bzw. Folienstärken herausgeschnitten werden. Die Schaumstoffe können ein- oder beidseitig mit Deckschichten versehen oder kaschiert werden, z.B. mit Papier, Pappe, Glasvlies, Holz, Gipsplatten, Metallblechen oder -folien, Kunststoff-Folien, die gegebenenfalls auch geschäumt sein können.

Das Hauptanwendungsgebiet der erfindungsgemäß hergestellten Schaumstoffe ist die akustische und/oder thermische Isolierung im Luft- Schiffs- und Kraftfahrzeugbau, im Maschinenbau oder im Bauwesen, insbesondere die Wärme- und Schalldämmung von Gebäuden und Gebäudeteilen, insbesondere von Zwischenwänden, aber auch von Dächern, Fassaden, Türen und Fußböden; weiterhin die Wärme- und Schalldämmung der Motor- und Innenräume von Fahrzeugen und Flugzeugen sowie die Tieftemperaturisolierung, z.B. von Kühlhäusern, Öltanks und Behältern von Flüssiggas. Weitere Anwendungsgebiete sind die Verwendung als isolierende Wandverkleidung sowie als isolierendes und stoßdämmendes Verpackungsmaterial. Aufgrund der hohen Härte vernetzter Melaminharze können die Schaumstoffe auch als Reinigungsmittel, beispielsweise für leicht abrasiv wirkende Reinigungs-, Schleif- und Polierschwämme eingesetzt werden. Die offenzellige Struktur der Schaumstoffe erlaubt zusätzlich die Aufnahme und Speicherung geeigneter Reinigungs-, Schleif- und Poliermittel im Innern der Schaumstoffe. Auch können die Schwämme für spezielle Reinigungsaufgaben hydrophob und oleophob ausgerüstet werden. Wegen der extrem niedrigen Formaldehyd-Emissionen lassen sich die erfindungsgemäßen Schaumstoffe auch im Hygienesektor z.B. in Form von dünnen Vliesen als Wundverband oder als Bestandteil von Babywindeln, Femcare und Inkontinenzprodukten einsetzen.

Die nach den erfindungsgemäßen Verfahren herstellbaren Melamin/Formaldehyd-Schaumstoffe zeichnen sich gegenüber bekannten Melamin/Formaldehyd-Schaumstoffen dadurch aus, daß sie auch unter Warm/Feuchtbedingungen nur geringe Formaldehydemissionen aufweisen, gute mechanische Eigenschaften haben und keine Vergilbungseffekte zeigen.

Die Erfindung wird anhand der nachfolgenden Beispiele näher erläutert.

### Beispiele:

Stoffe oder Beispiele mit vorangestelltem "V-" sind nicht erfindungsgemäß und dienen zum Vergleich.

### Meßmethoden:

Die Formaldehydemissonen, die mechanischen Eigenschaften und die Vergilbung der Melamin/Formaldehyd-Schaumstoffe wurde nach den folgenden Methoden ermittelt:
Formaldehydemissionen:
   DIN EN 717-1 (Prüfkammer bei 23 Grad C / 50 % r.F.)
   DIN EN 14184-1 (Probe bei 40 Grad C / 1 h in Wasser gelagert)
   VDA 275 (Probe bei 60 Grad C / 100 % r.F. über Wasser)
mechanische Eigenschaften:
   Zugfestigkeit DIN EN ISO 1798

### Vergilbung:

Die Bestimmung der an den jeweiligen Schaumstoffen erkennbaren Vergilbungseffekte erfolgte visuell und wurde immer von derselben Person gemäß folgendem Schema bewertet:
0 = keinerlei Vergilbungseffekte erkennbar
1 = leichte Vergilbungseffekte erkennbar
2 = deutliche Vergilbungseffekte erkennbar.

### Beispiel 1 und Vergleichsbeispiele V-2, V-3, V-4 und V-5

Es wurden jeweils 70 Gewichtsteile eines sprühgetrockneten Melamin/Formaldehyd-Vorkondensats (jeweiliges Molverhältnis Melamin : Formaldehyd sowie Sulfitgruppengehalt in Gew.-% bezogen auf das Melamin/Formaldehyd-Vorkondensat: s. Tabelle 1) in 30 Gewichtsteilen Wasser gelöst. Dieser Mischung wurden 3 Gewichtsteile Ameisensäure, 2 Gewichtsteile eines Fettalkoholpolyglykolethers als Tensid und 10 Gewichtsteile Pentan zugesetzt. Diese Mischung wurde kräftig gerührt und anschließend in einer Schäumform aus Polypropylen durch Einstrahlung von Mikrowellenenergie bei 2,54 GHz verschäumt.

Anschließend wurden die jeweils gebildeten Schaumstoffe unter den jeweils in Tabelle 1 genannten Bedingungen mit Heissluft getempert.

Die Eigenschaften der jeweils erhaltenen getemperten Schaumstoffe werden in Tabelle 1 widergegeben.

**Tabelle 1: Zusammensetzung der Melamin/Formaldehyd-Vorkondensate sowie Temperbedingungen und Eigenschaften der Schaumstoffe (vorangestelltes V: zum Vergleich, "FA" bedeutet Formaldehyd)**

| Beispiel | 1 | V-2 | V-3 | V-4 | V-5 |
|---|---|---|---|---|---|
| | | | | | |
| Molverhältnis Melamin : Formaldehyd | 1:3 | 1:3 | 1:3 | 1:3 | 1:1,6 |
| Sulfitgruppengehalt [Gew.-%] | 0 | 2 | 2 | 0 | 0 |
| | | | | | |
| Tempertemperatur [°C] | 260 | 240 | 260 | 240 | 240 |
| Temperdauer [min] | 10 | 10 | 10 | 10 | 10 |
| Heißluft-Mengenstrom bei Temperung [Nm³/ m² durchströmter Schaumfläche / h] | 4700 | 4700 | 4700 | 4700 | 4700 |
| | | | | | |
| Eigenschaften | | | | | |
| | | | | | |
| FA-Emission nach VDA 275 [mg FA / kg Schaumstoff] | 30 | 380 | 170 | 120 | 50 |
| FA-Emission nach DIN EN 14814-1 [mg FA / kg Schaumstoff] | 12 | 94 | 52 | 32 | 18 |
| FA-Emission nach DIN EN 717-1 [mg FA / m³ Luft] | 0,01 | 0,05 | 0,03 | 0,02 | 0,01 |
| Vergilbung | 0 | 1 | 2 | 0 | 0 |
| Zugfestigkeit nach DIN EN ISO 1798 [kPa] | 120 | 130 | 110 | 130 | 60 |
| | | | | | |

Die Beispiele belegen, daß die nach den erfindungsgemäßen Verfahren herstellbaren Melamin/Formaldehyd-Schaumstoffe sich gegenüber bekannten Melamin/Formaldehyd-Schaumstoffen dadurch auszeichnen, daß sie auch unter Warm/Feuchtbedingungen nur geringe Formaldehydemissionen aufweisen, gute mechanische Eigenschaften haben und keine Vergilbungseffekte zeigen.

## Patentansprüche

1. Verfahren zur Herstellung von Melamin/Formaldehyd-Schaumstoffen, umfassend die aufeinanderfolgenden Verfahrensschritte a) und b):
a) Erwärmen unter Aufschäumen und Vernetzen einer Mischung, enthaltend ein Melamin/Formaldehyd-Vorkondensat, einen Härter und ein Treibmittel, und
b) Tempern des in Verfahrensschritt a) erhaltenen Schaumstoffs,
**dadurch gekennzeichnet,**
- **dass** im Verfahrensschritt a) ein Vorkondensat eingesetzt wird, welches ein Molverhältnis von Melamin:Formaldehyd im Bereich von 1:2,5 bis 1:3,5 aufweist, und
- welches einen Sulfitgruppengehalt, bezogen auf das Gesamtgewicht des Melamin/Formaldehyd-Vorkondensats, von 0 Gew.-% aufweist, und
- **dass** im Verfahrensschritt b) das Tempern bei einer Temperatur im Bereich von 250 bis 270°C durchgeführt wird.

2. Verfahren nach Anspruch 1, **dadurch gekennzeichnet, dass** im Verfahrensschritt b) die Dauer des Temperns 10 bis 60 min beträgt.

3. Verfahren nach Ansprüchen 1 bis 2, **dadurch gekennzeichnet, dass** im Verfahrensschritt b) das Tempern durch Heißluft mit einem Mengenstrom im Bereich von 2000 bis 8000 Nm³/ m² durchströmter Schaumfläche / h (mit Normbedingungen gemäß DIN 1343) erfolgt.

4. Verfahren nach Ansprüchen 1 bis 3, **dadurch gekennzeichnet, dass** nach Verfahrensschritt b) ein Verfahrensschritt c) durchgeführt wird, in dem der getemperte Schaumstoff verpreßt wird.

5. Melamin/Formaldehyd-Schaumstoffe, erhältlich nach Verfahren gemäß Ansprüchen 1 bis 4.

6. Melamin/Formaldehyd-Schaumstoffe nach Anspruch 5, die verbesserte Hydrolysestabilität und auch bei erhöhter Temperatur und Luftfeuchtigkeit sehr niedrige Formaldehydemissionen von
< 150 mg Formaldehyd / kg Melamin/Formaldehyd-Schaumstoff, gemessen nach VDA 275, und
< 40 mg Formaldehyd / kg Melamin/Formaldehyd-Schaumstoff, gemessen nach DIN EN 14184-1 und JIS L 1041, und
< 0,03 mg Formaldehyd / m³ Kammerluft, gemessen nach DIN EN 717-1, aufweisen.

7. Verwendung der Melamin/Formaldehyd-Schaumstoffe nach Ansprüchen 5 bis 6 zur akustischen und/oder thermischen Isolierung im Luft-, Schiffs- und Kraftfahrzeugbau, im Maschinenbau oder im Bauwesen sowie als Reinigungsmittel, insbesondere als abrasiver Reinigungsschwamm zur Reinigung von Oberflächen aller Art.

## Claims

1. A process for producing a melamine-formaldehyde foam comprising the consecutive steps a) and b):
a) heating a mixture comprising a melamine-formaldehyde precondensate, a curative and a blowing agent to foam up and crosslink said mixture, and
b) tempering the foam obtained in step a),
wherein
- step a) utilizes a precondensate which has a melamine:formaldehyde molar ratio in the range from 1:2.5 to 1:3.5, and
- which has a sulfite group content, based on the total weight of the melamine-formaldehyde precondensate, of 0% by weight, and
- said tempering in step b) is effected at a temperature in the range from 250 to 270°C.

2. The process according to claim 1 wherein the duration of said tempering in step b) is in the range from 10 to 60 min.

3. The process according to claims 1 to 2 wherein said tempering in step b) is effected by means of hot air at a flow rate in the range from 2000 to 8000 STPm³/m² of foam contact area/h (with STP conditions as per German standard specification DIN 1343).

4. The process according to claims 1 to 3 wherein step b) is followed by a step c) in which the tempered foam is press molded.

5. A melamine-formaldehyde foam obtainable by processes according to claims 1 to 4.

6. The melamine-formaldehyde foam according to claim 5, having improved stability to hydrolysis and even at elevated temperature and humidity having very low formaldehyde emissions of
< 150 mg of formaldehyde/kg of melamine-formaldehyde foam, measured to VDA 275, and
< 40 mg of formaldehyde/kg of melamine-formaldehyde foam, measured to DIN EN 14184-1 and JIS L 1041, and
< 0.03 mg of formaldehyde/m³ of chamber air, measured to DIN EN 717-1.

7. The use of the melamine-formaldehyde foam according to claims 5 to 6 for acoustical and/or thermal insulation in aircraft, ship and motor vehicle construction, in mechanical engineering or in building construction and also as cleaning means, more particularly as an abrasive cleaning sponge for cleaning surfaces of any kind.

## Revendications

1. Procédé de fabrication de mousses de mélamine/formaldéhyde, comprenant les étapes de procédé successives a) et b) :
a) le chauffage avec moussage et réticulation d'un mélange, contenant un pré-condensat de mélamine/formaldéhyde, un durcisseur et un agent gonflant, et
b) le recuit de la mousse obtenue à l'étape de procédé a),
**caractérisé en ce**
- **qu'**à l'étape de procédé a), un pré-condensat est utilisé, qui présente un rapport molaire mélamine:formaldéhyde dans la plage allant de 1:2,5 à 1:3,5, et
- qui présente une teneur en groupes sulfite, par rapport au poids total du pré-condensat de mélamine/formaldéhyde, de 0 % en poids, et
- **qu'**à l'étape de procédé b), le recuit est réalisé à une température dans la plage allant de 250 à 270 °C.

2. Procédé selon la revendication 1, **caractérisé en ce qu'**à l'étape de procédé b), la durée du recuit est de 10 à 60 minutes.

3. Procédé selon les revendications 1 à 2, **caractérisé en ce qu'**à l'étape de procédé b), le recuit a lieu par de l'air chaud avec un débit massique dans la plage allant de 2 000 à 8 000 Nm³/m² de surface de mousse traversée/h (en conditions normales selon DIN 1343).

4. Procédé selon les revendications 1 à 3, **caractérisé en ce qu'**une étape de procédé c), lors de laquelle la mousse recuite est comprimée, est réalisée après l'étape de procédé b).

5. Mousses de mélamine/formaldéhyde, pouvant être obtenues par un procédé selon les revendications 1 à 4.

6. Mousses de mélamine/formaldéhyde selon la revendication 5, qui présentent une stabilité à l'hydrolyse améliorée et des émissions de formaldéhyde très basses même à température et humidité de l'air élevées, de
< 150 mg de formaldéhyde/kg de mousse de mélamine/formaldéhyde, mesuré selon VDA 275, et
< 40 mg de formaldéhyde/kg de mousse de mélamine/formaldéhyde, mesuré selon DIN EN 14184-1 et JIS L 1041, et
< 0,03 mg de formaldéhyde/m³ d'air de la chambre, mesuré selon DIN EN 717-1.

7. Utilisation des mousses de mélamine/formaldéhyde selon les revendications 5 à 6 pour l'isolation acoustique et/ou thermique dans la construction d'aéronefs, de navires et d'automobiles, dans la construction de machines ou dans le bâtiment, ainsi qu'en tant qu'agent de nettoyage, notamment en tant que mousse de nettoyage abrasive pour le nettoyage de surfaces de tout type.
